# EUROPÄISCHE PATENTSCHRIFT

(11) **EP 3 019 774 B1**
(45) Veröffentlichungstag und Bekanntmachung des Hinweises auf die Patenterteilung: **09.08.2017**
(21) Anmeldenummer: 14733081.5
(22) Anmeldetag: 12.06.2014
(51) Int. Cl.: F16H 57/025, F16H 57/02

(54) **GETRIEBEMOTOR**
GEARED MOTOR
MOTORÉDUCTEUR

(30) Priorität: 09.07.2013 DE 102013011385
(43) Veröffentlichungstag der Anmeldung: 18.05.2016
(73) Patentinhaber: Sew-Eurodrive GmbH & Co. KG, 76646 Bruchsal (DE)
(72) Erfinder: BÜHN, Oliver, 76703 Kraichtal (DE); TEGELTIJA, Miki, 76689 Karlsdorf-Neuthardt (DE)
(86) Internationale Anmeldenummer: PCT/EP2014/001593
(87) Internationale Veröffentlichungsnummer: WO 2015/003770

(56) Entgegenhaltungen:
- DE-A1- 10 061 501
- DE-A1-102007 014 707
- DE-U1-212004 000 026
- JP-A- 2001 304 348
- US-A- 3 246 538
- US-A- 3 383 947
- US-A- 3 774 477

## Beschreibung

Die Erfindung betrifft einen Getriebemotor.

Es ist allgemein bekannt, dass bei einem Getriebemotor das Getriebegehäuse mit dem Motorgehäuse verbunden ist.

Aus der DE 10 2007 014 707 A1 ist als nächstliegender Stand der Technik ein Getriebe eines Getriebemotors bekannt.

Der Erfindung liegt daher die Aufgabe zugrunde, einen Getriebemotor in kostengünstiger und einfach herstellbarer Weise weiterzubilden.

Erfindungsgemäß wird die Aufgabe bei dem Getriebemotor nach den in Anspruch 1 angegebenen Merkmalen gelöst.

Wichtige Merkmale der Erfindung bei dem Getriebemotor sind, dass er
ein Getriebe und einen das Getriebe antreibenden Elektromotor aufweist,
wobei der Elektromotor eine Rotorwelle aufweist, die um ihre Rotorwellenachse drehbar angeordnet ist,
wobei das Getriebe ein erstes Gehäuseteil und ein zweites Gehäuseteil aufweist,
wobei das zweite Gehäuseteil einen Quadratflansch aufweist,
wobei das erste Gehäuseteil einen zum Motor zugewandten Rundflansch und einen zum zweiten Getriebegehäuseteil, insbesondere zum Quadratflansch des zweiten Gehäuseteils, zugewandten Quadratflansch aufweist,
wobei Rundflansch und Quadratflansch des ersten Gehäuseteils mittels eines zwischengeordneten Verbindungsabschnitts verbunden sind,
wobei der Verbindungsabschnitt des ersten Gehäuseteils an einem Oberflächenabschnitt Erhebungen, insbesondere in Umfangsrichtung gesehen Erhebungen, aufweist, welche sich parallel zur Rotorwellenachsrichtung erstrecken, insbesondere also vom Rundflansch zum Quadratflansch hin,
wobei ein jeweiliges Befestigungselement in eine jeweilige, im Quadratflansch des zweiten Gehäuseteils eingebrachte Gewindebohrung eingeschraubt ist und das Motorgehäuse auf das erste Gehäuseteil drückt, so dass dieses auf das zweite Gehäuseteil drückt,
wobei das jeweilige Befestigungselement in einer Ausnehmung vorgesehen ist, welche vom Rundflansch des ersten Gehäuseteils zum Quadratflansch des ersten Gehäuseteils durchgehend ausgebildet ist,
und im von einer jeweiligen der Erhebungen überdeckten Umfangswinkelbereich in derselben Umfangsposition, insbesondere relativ zur Rotorwellenachse und/oder von der Rotorwellenachsrichtung aus gesehen, angeordnet ist.

Von Vorteil ist dabei, dass das Befestigungselement in einer durch die Wandung des Verbindungsabschnitts durchgehenden Bohrung angeordnet ist. Dabei ist die Bohrung axial durchgehend. Das Befestigungselement ist mit seinem ersten Gewindebereich in die Gewindebohrung des ersten Gehäuseteils eingeschraubt und drückt mit seinem Schraubenkopf oder alternativ mit einer auf einen zweiten Gewindebereich des Befestigungselements aufgeschraubten Mutter auf das Motorgehäuse, durch dessen Gewindebohrung das Befestigungselement geführt ist, wobei der Schraubenkopf beziehungswiese die Mutter außerhalb der Ausnehmung angeordnet sind und auf die Fläche drücken, in welcher die Bohrung am Motorgehäuseteil eingebracht ist. Die Anordnung in dem von der Erhebung überdeckten Umfangswinkelpositionsbereich ermöglicht eine außerhalb des Bereichs der Erhebung eine dünne Wandstärke. Somit ist materialsparend und massearm eine stabile und öldichte Ausführung des Getriebes realisierbar. Denn nur im Bereich der Erhebung ist eine Aufdickung auszuführen, die aber wiederum gewichtsreduzierend von der Ausnehmung zur Durchführung des Befestigungselements durchsetzt ist.

Bei einer vorteilhaften Ausgestaltung sind Rundflansch, Quadratflansch und Verbindungsabschnitt des ersten Gehäuseteils einstückig, insbesondere also einteilig, ausgebildet. Von Vorteil ist dabei, dass eine einfache Herstellung ermöglicht ist.

Bei einer vorteilhaften Ausgestaltung berührt der Quadratflansch des ersten Gehäuseteils den Quadratflansch des zweiten Gehäuseteils. Von Vorteil ist dabei, dass ein rechteckförmig oder quadratisches Lochbild in einfacher Weise am Getriebe vorsehbar ist und das zweite Gehäuseteil quaderförmig, insbesondere sein Lochbild zum Anschließen weiterer Vorrichtungen oder zum Befestigen des Getriebes an der Wand, rechteckförmig oder quadratisch ausführbar ist. Somit ist die jeweilige Verbindung an einer quadratischen Fläche ausführbar.

Bei einer vorteilhaften Ausgestaltung ist der Verbindungsabschnitt hohl ausgeführt. Von Vorteil ist dabei, dass vom Verbindungsabschnitt ein Verzahnungsteil gehäusebildend umgebbar ist. Somit ist die eintreibende Getriebestufe innerhalb des Hohlraums anordenbar.

Bei einer vorteilhaften Ausgestaltung ist der zugehörige Hohlraum vom Motor durchgehend zum zweiten Gehäuseteil ausgeführt. Von Vorteil ist dabei, dass das Schmieröl des Getriebeinnenraums den Innenraumbereich des ersten und zweiten Getriebegehäuseteils durchsetzt und somit die eintreibende und abtreibende Stufe schmierbar ist.

Bei einer vorteilhaften Ausgestaltung mündet der Hohlraum des ersten Gehäuseteils an seinem ersten Endbereich in einer Ausnehmung des Rundflanschen des ersten Gehäuseteils und an seinem anderen Endbereich in einer Ausnehmung des Quadratflansches des ersten und/oder zweiten Gehäuseteils mündet. Von Vorteil ist dabei, dass das erste Gehäuseteil einerseits an einem rotativen Elektromotor anmontierbar ist und andererseits an einem im Wesentlichen quaderförmigen Getriebe oder an einem Getriebe, dessen Lochbilder zum Anschließen von Vorrichtungen oder zur Befestigung quaderförmig oder rechteckförmig ist.

Bei einer vorteilhaften Ausgestaltung ist der vom Rundflansch überdeckte Radialabstand zur Rotorwellenachse größer als der von den Erhebungen des Verbindungsabschnitts abgedeckte Radialabstand. Von Vorteil ist dabei, dass also der größte Radialabstand des Rundflansches größer ist als der größte Radialabstand der Erhebungen. Somit ist der Verbindungsabschnitt als Verengung am ersten Gehäuseteil zwischen Rundflansch und Quadratflansch anordenbar. Der Verbindungsabschnitt nimmt dabei eine Ausnehmung auf, welche radial im vom Rundflansch überdeckten Radialabstandsbereich angeordnet ist und durch die Wandung des Verbindungsabschnitts geführt ist. Der von der Wandung des Verbindungsabschnitts überdeckte Radialabstandsbereich überlappt also mit dem vom Rundflansch überdeckten Radialabstandsbereich. Somit ist zwar die radiale Ausdehnung der Erhebungen des Verbindungsabschnitts kleiner als die des Rundflansches. Dagegen ist aber die radiale Ausdehnung der Erhebungen des Verbindungsabschnitts größer als der Innendurchmesser des Rundflansches. Denn der Hohlraum des zweiten Gehäuseteils mündet zum Motor hin mit einer kreisförmigen oder zylinderförmigen Öffnung, welche diesen Innendurchmesser aufweist.

Bei einer vorteilhaften Ausgestaltung ist die Wandstärke des Verbindungsabschnitts im Bereich einer jeweiligen Erhebung verdickt ausgeführt,
insbesondere der jeweilige Umfangswinkel der maximalen, insbesondere lokal maximalen, Verdickung dem jeweiligen Umfangswinkel der maximalen, insbesondere lokal maximalen, Verdickung entspricht. Von Vorteil ist dabei, dass das jeweilige Befestigungselement in der Verdickung der Wandung des Verbindungsabschnitts anordenbar ist. Somit ist eine Ausnehmung materialsparend vorsehbar.

Bei einer vorteilhaften Ausgestaltung ist das Befestigungselement eine Schraube mit Schraubenkopf oder ein Gewindestift mit aufgeschraubter Mutter,
insbesondere wobei Mutter beziehungsweise Schraubenkopf auf den Flansch des Motors drücken. Von Vorteil ist dabei, dass eine einfache und dichte Verbindung der Gehäuseteile ausführbar ist.

Bei einer vorteilhaften Ausgestaltung ist der größte Radialabstand der jeweiligen, sich in axialer Richtung erstreckenden Erhebung unabhängig von der axialen Position, insbesondere in einem axialen Abschnitt, insbesondere wobei die axiale Position in einem axialen Abschnitt angeordnet ist, der mehr als ein Zehntel, insbesondere mehr als drei Zehntel, des von dem Verbindungsabschnitt überdeckten axialen Bereichs überdeckt. Von Vorteil ist dabei, dass die Erhebungen sich axial erstrecken und somit die Ausnehmung für das jeweilige Befestigungselement materialsparend und platzsparend unterbringbar ist in der Verdickung der Wandung, die sich ebenfalls wie auch die Erhebung axial erstreckt.

Bei einer vorteilhaften Ausgestaltung ist die durch die jeweilige Erhebung und die beidseitig in Umfangsrichtung benachbarten Vertiefungen definierte Amplitude größer als die dünnste Wandstärke des Verbindungsabschnitts. Von Vorteil ist dabei, dass die Ausnehmung für das jeweilige Befestigungselement auf kleinerem radialen Abstand angeordnet ist als der Radialabstand der jeweils benachbarten Vertiefung. Somit ist eine dünne Wandstärke realisierbar bei einer Amplitude der wellenförmigen Erhebungen und Vertiefungen, welche größer ist als die Wandstärke.

Bei einer vorteilhaften Ausgestaltung ist die Erstreckungsrichtung der Erhebungen jeweils parallel zur Rotorwellenachsrichtung. Von Vorteil ist dabei, dass das Befestigungselement ebenfalls in axialer Richtung ausrichtbar ist und somit in der Verdickung der wandstärke, welche parallel zur Erstreckungsrichtung der Erhebung verläuft, anordenbar ist.

Bei einer vorteilhaften Ausgestaltung wechseln die Erhebungen in Umfangsrichtung sich mit Vertiefungen wellenförmig ab. Von Vorteil ist dabei, dass mittels des wellenförmigen Verlaufs ein gefälliges Design erreichbar ist. Außerdem fließt Wasser ab. Dies gilt nicht nur in einer Montageausrichtung des Getriebes sondern in mehreren verschiedenen Montageausrichtungen..

Der vom Rundflansch überdeckte Radialabstand zur Rotorwellenachse größer ist als der von den Erhebungen und Vertiefungen abgedeckte Radialabstand ist. Von Vorteil ist dabei, dass die Befestigungsbohrung in den Rundflansch einbringbar ist und somit innerhalb des vom Rundflansch überdeckten Radialabstandsbereichs anordenbar ist. Trotzdem sind die Erhebungen radial weniger ausgedehnt als der Rundflansch. Auf diese Weise ist der Verbindungsabschnitt möglichst kompakt ausführbar und somit das Getriebe materialsparend ausführbar.

Weitere Vorteile ergeben sich aus den Unteransprüchen.

Die Erfindung wird nun anhand von Abbildungen näher erläutert:

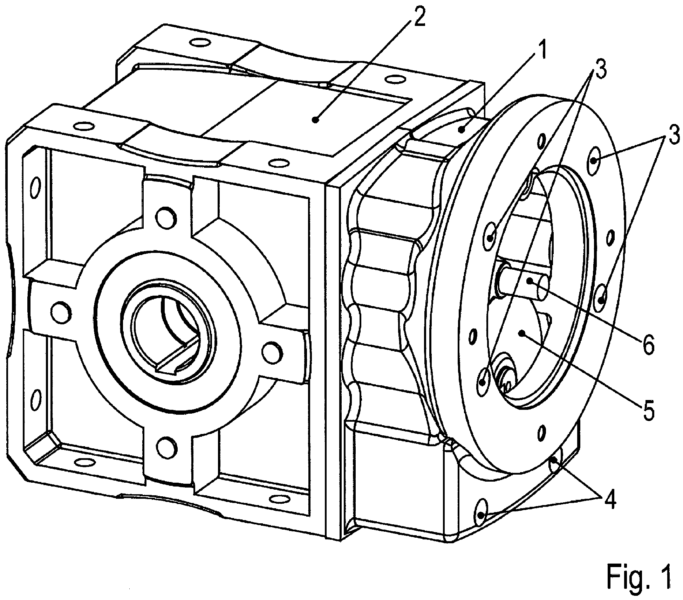

In der Figur 1 ist ein Getriebegehäuse in Schrägansicht schematisch gezeigt, welches aus einem ersten und einem zweiten Gehäuseteil (1, 2) zusammengesetzt ist, wobei die beiden Gehäuseteile (1, 2) jeweils einen Quadratflansch aufweisen, wobei die beiden Quadratflansche einander berühren und aneinander anliegen.

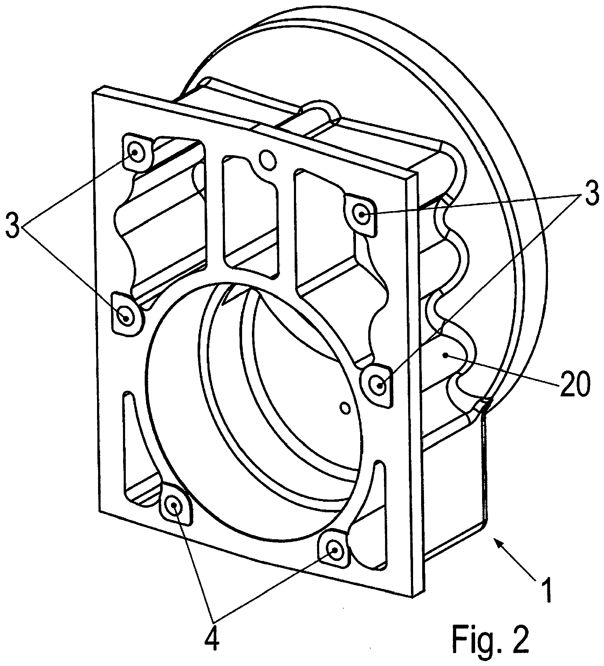

In der Figur 2 ist das erste Gehäuseteil, 1 in Schrägansicht gezeigt mit Blickrichtung auf den Quadratflansch.

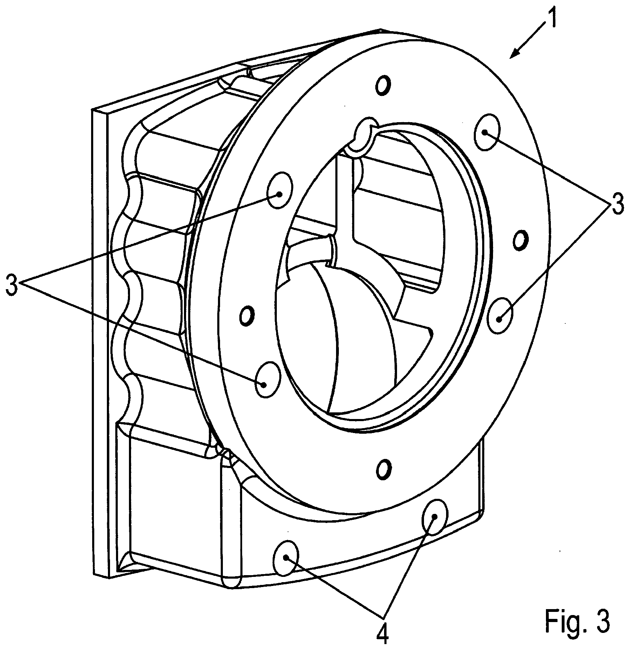

In der Figur 3 ist das erste Gehäuseteil, 1 in Schrägansicht gezeigt mit Blickrichtung auf einen dem Quadratflansch axial entgegengesetzt angeordneten Rundflansch.

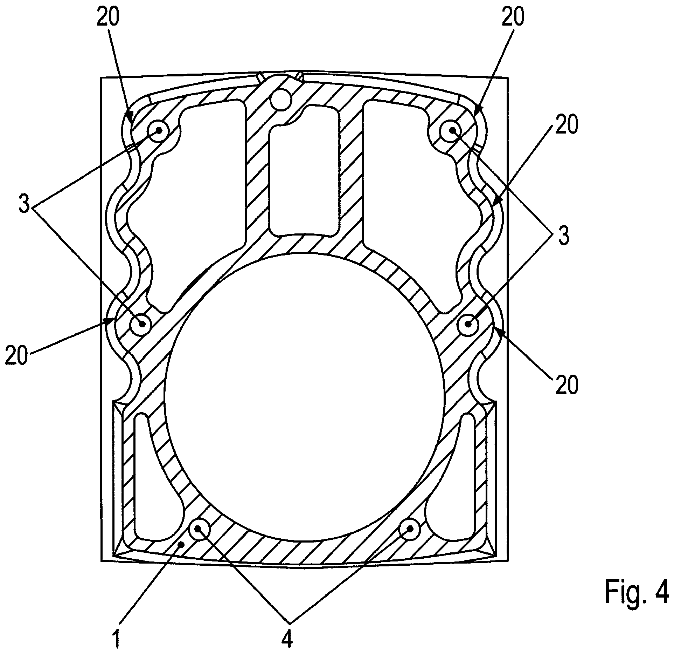

In der Figur 4 ist ein Querschnitt durch das erste Gehäuseteil 1 gezeigt, insbesondere durch den zwischen den Quadratflansch und den Rundflansch zwischengeordneten verbindenden Verbindungsabschnitt des Gehäuseteils 1.

Wie in den Figuren gezeigt, weist das Getriebe ein erstes Gehäuseteil 1 und ein zweites Gehäuseteil 2 auf, wobei das erste Gehäuseteil eine Vorstufe, also beispielsweise die eintreibende Getriebestufe des Getriebes, gehäusebildend umgibt und das zweite Gehäuseteil eine Endstufe, also die abtreibende Getriebestufe des Getriebes, gehäusebildend umgibt.

Das erste Gehäuseteil 1 nimmt somit die eintreibende Welle 6 auf, auf welcher drehfest ein Verzahnungsteil angeordnet ist, welches mit einem weiteren Zahnrad 5 der eintreibenden Getriebestufe kämmt.

Der Quadratflansch des ersten Gehäuseteils ist parallel zum Rundflansch des ersten Gehäuseteils 1 ausgerichtet, wobei ein Elektromotor mit seinem Flansch am Rundflansch anmontierbar ist. Die Rotorwellenachse des Elektromotors ist parallel zur Normalenrichtung der Berührfläche zwischen Rundflansch und Flansch des Motors sowie parallel zur Normalenrichtung der Berührfläche zwischen dem Quadratflansch des ersten und des zweiten Gehäuseteils (1, 2). Rundflansch und Quadratflansch des ersten Gehäuseteils 1 sind in axialer Richtung der Rotorwellenachse des Elektromotors voneinander beabstandet.

Der Motorflansch, also Flansch des Elektromotors, liegt am Rundflansch des ersten Gehäuseteils 1 an und wird mittels Befestigungsmitteln, insbesondere schrauben am Getriebe befestigt. Die Befestigungsmittel, insbesondere Schrauben, sind durch eine durchgehende Ausnehmung im Flansch und durch eine durchgehende Ausnehmung im ersten Gehäuseteil 1, nämlich durch die ersten Durchgangsbohrungen 3, insbesondere Befestigungsschrauben, durchgeführt und in eine jeweilige Gewindebohrung im zweiten Gehäuseteil 2 eingeschraubt. Das Bohrbild der Gewindebohrungen ist in den Quadratflansch des zweiten Gehäuseteils 2 eingebracht.

Hierbei drückt der Schraubenkopf jedes Befestigungsmittels, jeweils auf einen vom Getriebe abgewandte Oberflächenabschnitt des Flansches des Elektromotors und drückt somit den Flansch auf das erste Gehäuseteil 1, welches wiederum auf das zweite Gehäuseteil 2 gedrückt wird.

Das erste Gehäuseteil 1 weist einen Verbindungsabschnitt auf, welcher zwischen Quadratflansch und Rundflansch des ersten Gehäuseteils angeordnet ist und diese somit verbindet.

Der Verbindungsabschnitt ist hohl ausgeführt, so dass die Verzahnungsteile der eintreibenden Stufe zumindest teilweise gehäusebildend umgebbar sind.

An seiner Oberfläche weist der Verbindungsabschnitt in Umfangsrichtung gesehen eine wellenartige Struktur auf. Hierbei sind die Erhebungen und Vertiefungen der wellenartigen Struktur in radialer Richtung, also nach außen gerichtet, vorgesehen.

Entsprechend ist die Wandstärke des Verbindungsabschnitts in Umfangsrichtung veränderlich. Jeder Erhebung 20 in radialer Richtung ist somit eine Verdickung der Wandstärke zugeordnet.

Die in axialer Richtung durch das erste Gehäuseteil 1 durchgehenden Ausnehmungen zur Durchführung der Befestigungsmittel, insbesondere Schrauben, sind jeweils im Bereich einer jeweiligen Verdickung der Wand, also in einem Bereich mit erhöhter Wandstärke angeordnet.

Das erste Gehäuseteil 1 weist nicht nur die genannten ersten Ausnehmungen, also Durchgangsbohrungen 3, sondern auch zweite Durchgangsbohrungen 4 auf, welche für weitere Befestigungsmittel vorgesehen sind.

Jeder der Erhebungen 20 entspricht ein lokales Maximum der in Querrichtung zur Rotorwellenachsrichtung oder der in radialer Richtung gemessenen maximalen Ausdehnung des Verbindungsabschnitts.

Die Erhebungen 20 erstrecken sich in axialer Richtung, also parallel zur Rotorwellenachsrichtung. Somit erstrecken sich die Erhebungen 20 vom Rundflansch zum Quadratflansch des ersten Gehäuseteils 1 hin.

Der vom Rundflansch überdeckte Radialabstand zur Rotorwellenachse größer ist als der von den Erhebungen 20 abgedeckte Radialabstand ist.

Das erste und das zweite Gehäuseteil (1,2) weisen jeweils einen Lagersitz zur Aufnahme eines Lagers einer Welle des Getriebes auf. Es ist sogar ein Schmierölverschlussdeckel am ersten oder am zweiten Gehäuseteil (1,2) vorsehbar, so dass nach Entfernen des Deckels der Ölstand bestimmbar ist und/oder Öl ablassbar oder einlassbar ist. Mittels des Lagersitzes ist im Gehäuseteil (1, 2) eine Welle aufnehmbar und auch die entsprechenden Querkräfte ableitbar übers jeweilige Gehäuseteil (1, 2). Dadurch, dass die Befestigungsschrauben durchgehend durch das erste Gehäuseteil 1 angeordnet sind, sind diese auch geschützt vor Korrosion.

Bei einem weiteren erfindungsgemäßen Ausführungsbeispiel werden statt der Schrauben Gewindestifte verwendet, die in die Gewindebohrungen des zweiten Gehäuseteils 2 eingeschraubt sind und auf deren vom zweiten Gehäuseteil abgewandten Endbereich jeweils eine den Schraubenkopf ersetzende Mutter aufgeschraubt ist, welche auf den Flansch des Elektromotors drückt.

### Bezugszeichenliste

1 erstes Gehäuseteil, insbesondere Vorstufengehäuse
2 zweites Gehäuseteil, insbesondere Endstufengehäuse
3 erste Durchgangsbohrungen für Befestigungsmittel, insbesondere Befestigungsschrauben
4 zweite Durchgangsbohrungen für Befestigungsmittel, insbesondere Befestigungsschrauben
5 Zahnrad der eintreibenden Stufe
6 eintreibende Welle
20 Erhebung in Querrichtung

## Patentansprüche

1. Getriebemotor,
aufweisend ein Getriebe und einen das Getriebe antreibenden Elektromotor,
wobei der Elektromotor eine Rotorwelle aufweist, die um ihre Rotorwellenachse drehbar angeordnet ist,
wobei das Getriebe ein erstes Gehäuseteil (1) und ein zweites Gehäuseteil (2) aufweist, wobei das zweite Gehäuseteil (2) einen Quadratflansch aufweist,
wobei das erste Gehäuseteil (1) einen zum Elektromotor zugewandten Rundflansch und einen zum zweiten Gehäuseteil (2), insbesondere zum Quadratflansch des zweiten Gehäuseteils (2), zugewandten Quadratflansch aufweist,
wobei Rundflansch und Quadratflansch des ersten Gehäuseteils (1) mittels eines zwischengeordneten Verbindungsabschnitts verbunden sind,
wobei der Verbindungsabschnitt des ersten Gehäuseteils (1) an einem Oberflächenabschnitt Erhebungen (2), insbesondere in Umfangsrichtung gesehen Erhebungen (20), aufweist, welche sich parallel zur Rotorwellenachsrichtung erstrecken, insbesondere also vom Rundflansch zum Quadratflansch des ersten Gehäuseteils (1) hin,
**dadurch gekennzeichnet, dass**
ein jeweiliges Befestigungselement in eine jeweilige, im Quadratflansch des zweiten Gehäuseteils (2) eingebrachte Gewindebohrung eingeschraubt ist und **ein Gehäuse des Elektromotors** auf das erste Gehäuseteil (1) drückt, so dass dieses auf das zweite Gehäuseteil (2) drückt,
wobei das jeweilige Befestigungselement in einer Ausnehmung vorgesehen ist, welche vom Rundflansch des ersten Gehäuseteils (1) zum Quadratflansch des ersten Gehäuseteils (1) durchgehend ausgebildet ist,
und im von einer jeweiligen der Erhebungen (20) überdeckten Umfangswinkelbereich in derselben Umfangsposition, insbesondere relativ zur Rotorwellenachse und/oder von der Rotorwellenachsrichtung aus gesehen, angeordnet ist.

2. Getriebemotor nach Anspruch 1,
**dadurch gekennzeichnet, dass**
Rundflansch, Quadratflansch und Verbindungsabschnitt des ersten Gehäuseteils (1) einstückig, insbesondere also einteilig, ausgebildet sind.

3. Getriebemotor nach mindestens einem der vorangegangenen Ansprüche,
**dadurch gekennzeichnet, dass**
der Quadratflansch des ersten Gehäuseteils (1) den Quadratflansch des zweiten Gehäuseteils (2) berührt.

4. Getriebemotor nach mindestens einem der vorangegangenen Ansprüche,
**dadurch gekennzeichnet, dass**
der Verbindungsabschnitt hohl ausgeführt ist,

5. Getriebemotor nach Anspruch 4,
**dadurch gekennzeichnet, dass**
der **zum** Verbindungsabschnitt zugehörige Hohlraum vom Elektromotor durchgehend zum zweiten Gehäuseteil (2) ausgeführt ist
und/oder dass
der Hohlraum an seinem ersten Endbereich in einer Ausnehmung des Rundflansches des ersten Gehäuseteils (1) mündet und an seinem anderen Endbereich in einer Ausnehmung des Quadratflansches des ersten und/oder zweiten Gehäuseteils (2) mündet.

6. Getriebemotor nach mindestens einem der vorangegangenen Ansprüche,
**dadurch gekennzeichnet, dass**
der vom Rundflansch überdeckte Radialabstand zur Rotorwellenachse größer ist als der von den Erhebungen (20) des Verbindungsabschnitts abgedeckte Radialabstand ist.

7. Getriebemotor nach mindestens einem der vorangegangenen Ansprüche,
**dadurch gekennzeichnet, dass**
die Wandstärke des Verbindungsabschnitts im Bereich einer jeweiligen Erhebung (20) verdickt ausgeführt ist.

8. Getriebemotor nach mindestens einem der vorangegangenen Ansprüche,
**dadurch gekennzeichnet, dass**
das Befestigungselement eine Schraube mit Schraubenkopf oder ein Gewindestift mit aufgeschraubter Mutter ist, insbesondere wobei Mutter beziehungsweise Schraubenkopf auf einen Flansch des Elektromotors drücken.

9. Getriebemotor nach mindestens einem der vorangegangenen Ansprüche,
**dadurch gekennzeichnet, dass**
der größte Radialabstand der jeweiligen, sich in axialer Richtung erstreckenden Erhebung (20) unabhängig von der axialen Position ist,
insbesondere in einem axialen Abschnitt, insbesondere wobei die axiale Position in einem axialen Abschnitt angeordnet ist, der mehr als ein Zehntel, insbesondere mehr als drei Zehntel, des von dem Verbindungsabschnitt überdeckten axialen Bereichs überdeckt.

10. Getriebemotor nach mindestens einem der vorangegangenen Ansprüche,
**dadurch gekennzeichnet, dass**
die durch die jeweilige Erhebung (20) und die beidseitig in Umfangsrichtung benachbarten Vertiefungen definierte Amplitude größer ist als die dünnste Wandstärke des Verbindungsabschnitts.

11. Getriebemotor nach mindestens einem der vorangegangenen Ansprüche,
**dadurch gekennzeichnet, dass**
die Erstreckungsrichtung der Erhebungen (20) jeweils parallel zur Rotorwellenachsrichtung ist.

12. Getriebemotor nach mindestens einem der vorangegangenen Ansprüche,
**dadurch gekennzeichnet, dass**
die Erhebungen (20) in Umfangsrichtung sich mit Vertiefungen wellenförmig abwechseln.

13. Getriebemotor nach mindestens einem der vorangegangenen Ansprüche,
**dadurch gekennzeichnet, dass**
das erste und das zweite Gehäuseteil (2) jeweils einen Lagersitz zur Aufnahme eines Lagers einer Welle (6) des Getriebes und/oder einen Schmierölverschlussdeckel aufweisen.

## Claims

1. A geared motor,
having a transmission and an electric motor which drives the transmission,
wherein the electric motor has a rotor shaft which is arranged rotatably about its rotor-shaft axis,
wherein the transmission has a first housing part (1) and a second housing part (2),
wherein the second housing part (2) has a square flange,
wherein the first housing part (1) has a round flange facing the electric motor and a square flange facing the second housing part (2), in particular facing the square flange of the second housing part (2),
wherein the round flange and square flange of the first housing part (1) are connected by means of an interposed connecting portion,
wherein the connecting portion of the first housing part (1) has elevations (2) on a surface portion, in particular elevations (20) viewed in the peripheral direction, which extend parallel to the axial direction of the rotor shaft, in particular therefore from the round flange towards the square flange of the first housing part (1),
**characterised in that**
a respective fastening element is screwed into a respective threaded bore formed in the square flange of the second housing part (2) and a housing of the electric motor presses on the first housing part (1), so that the latter presses on the second housing part (2),
the respective fastening element being provided in a recess which is formed uninterrupted from the round flange of the first housing part (1) to the square flange of the first housing part (1),
and in the angle-at-circumference region which is covered by a respective one of the elevations (20) is arranged in the same peripheral position, in particular relative to the rotor-shaft axis and/or viewed from the axial direction of the rotor shaft.

2. A geared motor according to Claim 1,
**characterised in that**
the round flange, square flange and connecting portion of the first housing part (1) are formed in one piece, in particular therefore in one part.

3. A geared motor according to at least one of the preceding claims,
**characterised in that**
the square flange of the first housing part (1) touches the square flange of the second housing part (2).

4. A geared motor according to at least one of the preceding claims,
**characterised in that**
the connecting portion is formed to be hollow.

5. A geared motor according to Claim 4,
**characterised in that**
the cavity associated with the connecting portion is embodied uninterrupted from the electric motor to the second housing part (2)
and/or **in that**
the cavity at its first end region opens in a recess in the round flange of the first housing part (1) and at its other end region opens in a recess of the square flange of the first and/or second housing part (2).

6. A geared motor according to at least one of the preceding claims,
**characterised in that**
the radial distance, covered by the round flange, from the rotor-shaft axis is greater than the radial distance covered by the elevations (20) of the connecting portion.

7. A geared motor according to at least one of the preceding claims,
**characterised in that**
the wall thickness of the connecting portion is formed thickened in the region of a respective elevation (20).

8. A geared motor according to at least one of the preceding claims,
**characterised in that**
the fastening element is a screw with a screw head or a threaded rod with a screwed-on nut,
in particular with the nut or screw head pressing on a flange of the electric motor.

9. A geared motor according to at least one of the preceding claims,
**characterised in that**
the greatest radial distance of the respective elevation (20) extending in the axial direction is independent of the axial position,
in particular in an axial portion, in particular with the axial position being arranged in an axial portion which is more than one tenth, in particular more than three tenths, of the axial region covered by the connecting portion.

10. A geared motor according to at least one of the preceding claims,
**characterised in that**
the amplitude defined by the respective elevation (20) and the depressions adjacent on both sides in the circumferential direction is greater than the thinnest wall thickness of the connecting portion.

11. A geared motor according to at least one of the preceding claims,
**characterised in that**
the direction of extent of the elevations (20) is in each case parallel to the axial direction of the rotor shaft.

12. A geared motor according to at least one of the preceding claims,
**characterised in that**
the elevations (20) alternate in undulating manner with depressions in the circumferential direction.

13. A geared motor according to at least one of the preceding claims,
**characterised in that**
the first and the second housing part (2) have in each case a bearing seat for receiving a bearing of a shaft (6) of the transmission and/or a lubricating-oil cap.

## Revendications

1. Motoréducteur,
présentant un réducteur et un moteur électrique entraînant le réducteur,
sachant que le moteur électrique présente un arbre de rotor, qui est disposé à rotation autour de son axe d'arbre de rotor,
sachant que le réducteur présente une première partie de carter (1) et une deuxième partie de carter (2),
sachant que la deuxième partie de carter (2) présente une bride carrée,
sachant que la première partie de carter (1) présente une bride ronde dirigée vers le moteur électrique et une bride carrée dirigée vers la deuxième partie de carter (2), en particulier vers la bride carrée de la deuxième partie de carter (2),
sachant que la bride ronde et la bride carrée de la première partie de carter (1) sont reliées au moyen d'une portion de liaison intercalée,
sachant que la portion de liaison de la première partie de carter (1) présente sur une portion de sa surface des surélévations (2), en particulier des surélévations (20) considéré en direction périphérique, qui s'étendent parallèlement à la direction de l'axe d'arbre de rotor, c'est-à-dire notamment depuis la bride ronde en direction de la bride carrée de la première partie de carter (1),
**caractérisé en ce qu'**un élément de fixation respectif est vissé dans un perçage fileté respectif pratiqué dans la bride carrée de la deuxième partie de carter (2) et appuie un carter du moteur électrique sur la première partie de carter (1), de sorte que celle-ci appuie sur la deuxième partie de carter (2).
sachant que l'élément de fixation respectif est prévu dans un évidement qui est réalisé continûment depuis la bride ronde de la première partie de carter (1) jusqu'à la bride carrée de la première partie de carter (1),
et qu'il est disposé, dans la plage d'angle inscrit couverte par une surélévation respective (20), dans la même position périphérique, en particulier par rapport à l'axe d'arbre de rotor et/ou considéré depuis la direction de l'axe d'arbre de rotor.

2. Motoréducteur selon la revendication 1, **caractérisé en ce que** la bride ronde, la bride carrée et la portion de liaison de la première partie de carter (1) sont réalisées d'un seul tenant, en particulier donc d'une seule pièce.

3. Motoréducteur selon au moins une des revendications précédentes, **caractérisé en ce que** la bride carrée de la première partie de carter (1) touche la bride carrée de la deuxième partie de carter (2).

4. Motoréducteur selon au moins une des revendications précédentes, **caractérisé en ce que** la portion de liaison est réalisée creuse.

5. Motoréducteur selon la revendication 4, **caractérisé en ce que** la cavité faisant partie de la portion de liaison est réalisée continûment depuis le moteur électrique jusqu'à la deuxième partie de carter (2),
et/ou **en ce que** la cavité débouche par sa première région terminale dans un évidement de la bride ronde de la première partie de carter (1), et par son autre région terminale dans un évidement de la bride carrée de la première et/ou de la deuxième partie de carter (2).

6. Motoréducteur selon au moins une des revendications précédentes, **caractérisé en ce que** la distance radiale par rapport à l'axe de l'arbre de rotor qui est couverte par la bride ronde est plus grande que la distance radiale couverte par les surélévations (20) de la portion de liaison.

7. Motoréducteur selon au moins une des revendications précédentes, **caractérisé en ce que** l'épaisseur de paroi de la portion de liaison est réalisée épaissie dans la région d'une surélévation respective (20).

8. Motoréducteur selon au moins une des revendications précédentes, **caractérisé en ce que** l'élément de fixation est un boulon avec une tête de boulon ou une tige filetée sur laquelle est vissé un écrou,
sachant notamment que l'écrou ou selon le cas la tête de boulon appuie sur une bride du moteur électrique.

9. Motoréducteur selon au moins une des revendications précédentes, **caractérisé en ce que** la plus grande distance radiale de la surélévation respective (20) s'étendant en direction axiale est indépendante de la position axiale,
en particulier dans une portion axiale, sachant notamment que la position axiale est disposée dans une portion axiale qui couvre plus d'un dixième, en particulier plus de trois dixièmes, de la région axiale couverte par la portion de liaison.

10. Motoréducteur selon au moins une des revendications précédentes, **caractérisé en ce que** l'amplitude définie par la surélévation respective (20) et les dépressions voisines de part et d'autre en direction périphérique est plus grande que la plus mince épaisseur de paroi de la portion de liaison.

11. Motoréducteur selon au moins une des revendications précédentes, **caractérisé en ce que** la direction de développement des surélévations (20) est chaque fois parallèle à la direction de l'axe de l'arbre de rotor.

12. Motoréducteur selon au moins une des revendications précédentes, **caractérisé en ce que** les surélévations (20) alternent avec des dépressions sous une forme ondulée en direction périphérique.

13. Motoréducteur selon au moins une des revendications précédentes, **caractérisé en ce que** la première et la deuxième partie de carter (2) présentent respectivement un siège de palier pour recevoir un palier d'un arbre (6) du réducteur et/ou un bouchon de fermeture pour lubrifiant.
